# EUROPÄISCHE PATENTSCHRIFT

(11) **EP 1 132 642 B1**
(45) Veröffentlichungstag und Bekanntmachung des Hinweises auf die Patenterteilung: **03.05.2006**
(21) Anmeldenummer: 01105572.0
(22) Anmeldetag: 06.03.2001
(51) Int. Cl.: F16F 1/393

(54) **Gummilager**
Rubber support
Support en gomme

(30) Priorität: 09.03.2000 DE 10011124
(43) Veröffentlichungstag der Anmeldung: 12.09.2001
(73) Patentinhaber: ZF Lemförder Metallwaren AG, 49448 Lemförde (DE)
(72) Erfinder: Rechtien, Martin, 49434 Neuenkirchen-Vörden (DE); Fischer, Markus, 49439 Steinfeld (DE); Kleiner, Wolfgang, 49419 Wagenfeld (DE)

(56) Entgegenhaltungen:
- EP-A- 0 148 073
- FR-A- 1 343 377
- GB-A- 589 538
- GB-A- 1 020 799
- US-A- 3 240 518
- US-A- 4 629 352
- US-A- 4 712 940
- PATENT ABSTRACTS OF JAPAN vol. 1996, no. 01, 31. Januar 1996 (1996-01-31) -& JP 07 248019 A (YAMASHITA GOMME KK), 26. September 1995 (1995-09-26)
- PATENT ABSTRACTS OF JAPAN vol. 1996, no. 12, 26. Dezember 1996 (1996-12-26) & JP 08 219141 A (TOKAI RUBBER IND LTD), 27. August 1996 (1996-08-27)

## Beschreibung

Die Erfindung betrifft ein Gummilager nach dem Oberbegriff des Patentanspruches 1.

Derartige Gummilager bestehen aus einem Innenteil, einer Außenhülse und einem zwischen Innenteil und Außenhülse angeordneten Elastomerkörper. Dieser kann aus Gummi oder anderen Elastomeren bestehen. Von Bedeutung ist insbesondere die dämpfende Eigenschaft des Elastomerwerkstoffes für derartige Gummilager, die in vielfältigen Varianten, insbesondere in der Kraftfahrzeugindustrie im Einsatz sind. Auf Grund ihrer Dämpfüngseigenschaften können von dem Antriebaggregat oder dem fahrbaren Untergrund herrührende Schwingungen gemindert werden, sodass eine Körperschall- und Schwingungsisolierung des Kraftfahrzeuges erreicht wird. Elastomerwerkstoffe, wie Gummi, weisen jedoch auch Nachteile auf. So sind sie insbesondere gegenüber Zugspannungen sehr empfindlich. Diese Zugspannungen führen bei einer Überbeanspruchung des Werkstoffes zu einer Rißbildung anfangs geringen Ausmaßes, die sich jedoch über einen längeren Zeitraum hinweg ausdehnen und letztlich zu einer Zerstörung des Bauteiles führen kann. Bei Ausführungen mit einem Elastomerkörper der durch Vulkanisation unlösbar zwischen Außenhülse und Innenteil angeordnet ist, besteht das Problem, dass bei einer Drehung des Innenteiles relativ zur Außenhülse oder bei einer winkligen Auslenkung in dem Elastomerkörper ein Rückstellmoment entsteht, das Zugspannungen verursacht. Um diese Zugspannungen zu reduzieren, ist es bekannt, den Elastomerkörper mit einer Vorspannung zu beaufschlagen. Es hat sich jedoch gezeigt, dass diese häufig als "Kalibrieren" bezeichnete Maßnahme allein nicht ausreichend ist, die Lebensdauer bekannter Gummilager in entscheidendem Maße zu erhöhen.

In der GB 1 020 799 ist ein Gummilager offenbart, welches einen separat gefertigten Elastomerkörper aufweist, der zwischen einem Innenteil und einer Außenhülse angeordnet und gleitend auf dem Innenteil aufgesetzt ist. Das Innenteil weist ferner eine sphärische Außenoberfläche und die Außenhülse eine zugeordnete weitestgehend konstant beabstandete spährische Innenoberfläche auf, zwischen denen der Elastomerkörper angeordnet ist. Das Gummilager ist beiseitig offen gestaltet, so dass Feuchtigkeit und Schmutz in nachteiliger Weise zwischen den Elastomerkörper und das Innenteil gelangen kann, wodurch die Gleitfähigkeit des Gummilagers sowie dessen Lebensdauer stark herabsetzt wird.

Darüber hinaus ist aus der JP 07248019, welche als nächstliegender Stand der Technik angsehen wird, ein Gummilager mit einem Innenteil und einem Außenteil bekannt, wobei zwischen dem Innenteil und dem Außenteil ein separat gefertigter Elastomerkörper angeordnet ist, welcher gleitend auf dem Innenteil aufgesetzt ist.

Der Erfindung liegt die technische Problemstellung zugrunde, ein Gummilager bereit zu stellen, dessen Lebensdauer gegenüber bekannten Ausführungen erheblich erhöht ist, dass sowohl Drehbewegungen des Innenteils relativ zur Außenhülse, als auch winklige (kardanische) Auslenkungen gestattet, ohne ein nennenswertes Rückstellmoment in dem Elastomerkörper zu erzeugen und das zudem einen einfachen Aufbau aufweist sowie eine vereinfachte Montage ermöglicht.

Die Erfindung löst diese technische Problemstellung mit den Merkmalen des Patentanspruches 1.

Einem Merkmal Zufolge wird vorgeschlagen den Elastomerkörper separat zu fertigen und ihn gleitend auf das Innenteil aufzusetzen. Die gleitende Verbindung zwischen Innenteil und Elastomerkörper gestattet insbesondere eine Relativbewegung zwischen den genannten Bauteilen, sodass für den Elastomerkörper schädliche Zugspannungen erst gar nicht entstehen können. Die Gleitfreudigkeit zwischen Innenteil und Elastomerkörper kann durch an sich bekannte Maßnahmen noch gesteigert werden. Beispielhaft sei hier nur das Einbringen eines Gleitfettes zwischen den kontaktierenden Bauteiloberflächen genannt. Darüber hinaus kann die Reibung zwischen Innenteil und Elastomerkörper reduziert werden, indem die Oberfläche strukturiert ausgeführt wird, sodass nur begrenzte Bereiche des Elastomerkörpers an dem Innenteil zur Anlage gelangen, was man sich beispielsweise als noppenartige Oberfläche des Innenteiles oder des Elastomerkörpers vorstellen kann.

Nach einem weiteren Merkmal ist das Innenteil zumindest abschnittsweise mit einer sphärischen Oberfläche ausgestattet Dieser sphärischen, also kugeligen Außenoberfläche des Innenteiles paßt sich der gleitend darauf aufgesetzte Elastomerkörper vollständig an. Die Außenhülse weist einen konstanten Abstand zur Oberfläche des Innenteiles auf, sodass diese eine äquidistante, also gleichverlaufende Innenoberfläche mit sphärischer Geometrie aufweist.

Ein erfindungsgemäßes Gummilager weist bei einer Verdrehung des Innenteiles relativ zur Außenhülse um die Lagermittenachse ebenso wenig Rückstellmomente im Elastomerkörper auf, wie bei einer Auswinkelung des Innenteiles relativ zur Außenhülse, also bei kardanischer Belastung. Bei Einbau des Gummilagers in einem Kraftfahrzeug wird dessen Fahrverhalten nicht negativ beeinflusst.

Da zwischen dem Innenteil und dem auf diesem angeordneten Elastomerkörper eine Gleitverbindung besteht ist es nicht immer mit Sicherheit auszuschließen, dass nicht auch Verunreinigungen oder Feuchtigkeit zwischen die relativ zueinander bewegten Bauteile gelangen können. Um diesem nachteiligen Effekt entgegenzuwirken, wird ferner vorgeschlagen, an den axial außenliegenden Randbereichen des Elastomerkörpers, also an beiden Seiten des Gummilagers Ringdichtungen am Elastomerkörper anzuformen. Diese Ringdichtungen sind umlaufend ausgeführt und liegen vorzugsweise an den zylindrischen Abschnitten des Innenteiles an.

Es hat sich insbesondere als vorteilhaft erwiesen, die Außenhülse zweiteilig auszuführen und den Elastomerkörper formschlüssig in die Außenhülse einzusetzen. Hierzu kann die Außenhülse eine strukturierte Innenoberfläche aufweisen. Darunter ist beispielsweise die Einbringung von Vertiefungen in die Innenoberfläche der Außenhülse zu verstehen, sodass sich der Elastomerkörper in diese Vertiefungen eindrücken kann. Durch eine derartige Maßnahme wird die Relativbewegung zwischen dem Elastomerkörper und der diesen aufnehmenden Außenhülse wirksam verhindert, sodass die Gleitbewegung nur zwischen dem Innenteil und dem Elastomerkörper stattfindet.
Um ein erfindungsgemäßes Gummilager insgesamt zu vereinfachen und damit seine Herstellungskosten zu reduzieren wird alternativ oder zusätzlich vorgeschlagen, das Innenteil zweiteilig auszuführen, wobei es aus einem ersten zylindrischen Bauteil mit einem darauf aufgebrachten, sphärischen zweiten Bauteil bestehen kann. Eine derartige Ausführung des Innenteiles ist insbesondere deshalb von Vorteil, weil das zylindrische erste Bauteil und das sphärische zweite Bauteil aus unterschiedlichen Werkstoffen hergestellt werden können.

Weitere Ausgestaltungen der Erfindung sind Gegenstand der Unteransprüche.

Dementsprechend wird gemäß einer weiteren Ausgestaltung der Erfindung vorgeschlagen, den Elastomerkörper unter einer Vorspannkraft in die Außenhülse einzusetzen. Die Vorspannkraft, welche über die Außenhülse auf den Elastomerkörper ausgeübt wird, verstärkt die Neigung des Elastomerkörpers, in die zuvor genannten Vertiefungen der Innenoberflächen der Außenhülse einzudringen und somit einen Formschluß zwischen Außenhülse und Elastomerkörper herbeizuführen.

So ist es gemäß einer weiteren Ausgestaltung der Erfindung denkbar, als erstes zylindrisches Bauteil ein metallisches Rohr zu verwenden und die Kugelgeometrie aus Kunststoff oder Hartgummi auf dieses zylindrische Rohr aufzubringen. Als Verfahren zur Verbindung zwischen dem metallischen Rohr und der Kunststoff- oder Hartgummikugel bietet sich ein Spritzgußverfahren in vorteilhafter Weise an, weil dieses kostengünstig ist und beliebige Oberflächengeometriegestaltungen gestattet.

Zur Verbesserung der Dichtungswirkung können die an den zylindrischen Abschnitten des Innenteils anliegenden Ringdichtungen beispielsweise als Labyrintdichtungen ausgeführt werden. Darüber hinaus ist es möglich lagereinwärts einen abgeschlossenen Ringraum vorzusehen, sodass die Ringbereiche quasi eine Abstreifwirkung an dem zylindrischen Abschnitt des Innenteiles hervorrufen. Wird ein solcher Ringraum vorgesehen, ergibt sich damit ein lippenförmiger Übergangsbereich zwischen den Ringdichtungen und dem Elastomerkörper.
Die Dichtwirkung der Ringdichtungen kann darüber hinaus durch eine weitere, einfache Maßnahme in erheblichem Maße verbessert werden. So wird gemäß einer Weiterbildung der Erfindung vorgeschlagen, am Außenumfang der Ringdichtungen eine Nut einzubringen in die beispielsweise ein Spannring oder ein anderes, die zentripedale Anpresswirkung der Ringdichtung verbesserndes Element einsetzbar ist.

Zur Vereinfachung der Montage eines erfindungsgemäßen Gummilagers ist es darüber hinaus vorteilhaft die Einzelteile der wenigstens zweiteilig ausgeführten Außenhülse mittels einer Schraub-, Schnapp-, Rast- oder Steckverbindung miteinander in Eingriff zu bringen.
Eine weitere Verbesserungsmöglichkeit der Reibungsreduzierung zwischen Elastomerkörper und Innenteil kann ferner darin bestehen, dass zwischen der Außenoberfläche des Innenteils und der Innenoberfläche des Elastomerkörpers zumindest abschnittsweise ein geringfügiger radialer Abstand vorhanden ist. Durch eine derartige Maßnahme wird zudem die radiale Dämpfung geringfügig weicher ausgestaltet, was für bestimmte Einsatzzwecke durchaus vorteilhaft sein kann.

Anhand der Zeichnungen werden nachfolgend bevorzugte Ausführungsformen erfindungsgemäßer Gummilager näher beschrieben.
Es zeigen :
- Figur 1:: ein erstes Gummilager im Querschnitt,
- Figur 2:: eine weitere Ausführung eines erfindungsgemäßen Gummilagers teilweise im Querschnitt,
- Figur 3:: eine Ausführungsform eines Gummilagers, welche das Verstandnis erleichtert und
- Figur 4:: eine dreidimensionale Ansicht eines Teiles der Außenhülse eines Gummilagers nach der vorliegenden Erfindung.

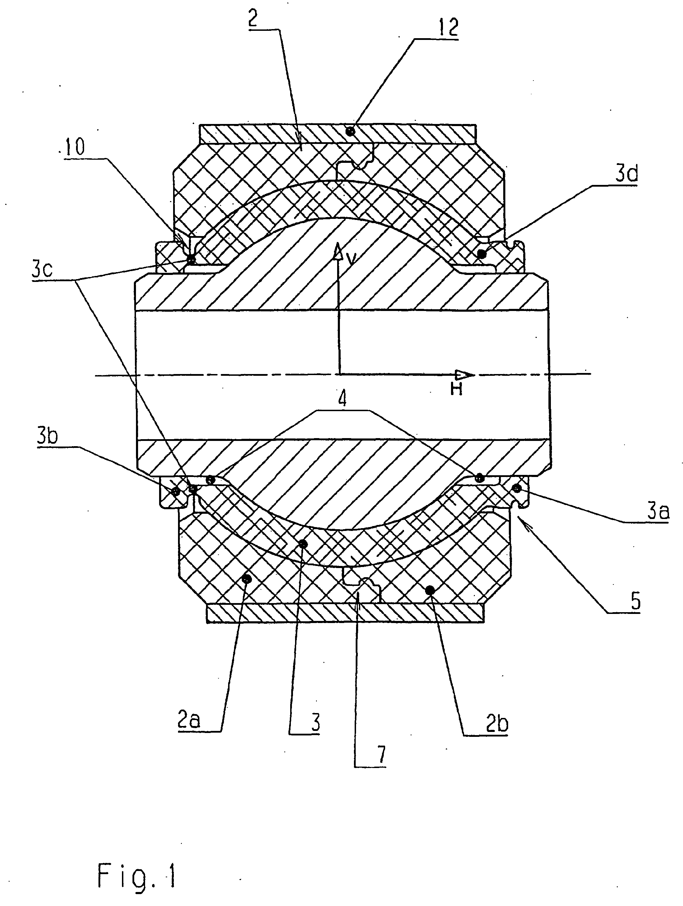

Die Figur 1 zeigt eine erste Ausführungsvariante eines erfindungsgemäßen Gummilagers. Dieses besteht aus einem Innenteil 1, das einteilig als metallisches Bauteil ausgeführt wurde und weist zylindrische Abschnitte im Randbereich sowie eine sphärische Oberflächengeometrie im mittigen Bereich auf. Auf das Innenteil 1 ist ein insgesamt mit 3 bezeichneter Elastomerkörper, der zuvor separat gefertigt wurde, aufgesetzt. Zwischen dem Innenteil 1 und dem Elastomerkörper 3 besteht eine Gleitverbindung, wobei zur Minderung der Reibung zwischen den Bauteilen ein Oberflächenschutz auf dem Innenteil 1 vorgesehen ist. Darüber hinaus ist als Elastomerwerkstoff ein selbstschmierender Gummi verwendet worden.

Der Elastomerkörper 3 ist in einer zweiteiligen, insgesamt mit 2 bezeichneten Außenhülse aufgenommen. Die Einzelteile 2a und 2b dieser Außenhülse sind mittels einer Rastverbindung in dem mit 7 gekennzeichneten Verbindungsbereich zusammengesetzt. Der Elastomerkörper 3 geht ausgehend von der sphärischen Geometrie des Innenteiles 1 in einen Übergangsbereich 3c bzw. 3d über, der mit einem reduzierten Querschnitt versehen ist. Zwischen diesem Übergangsbereich 3c bzw. 3d und der Oberfläche des Innenteiles 1 ist ein Ringraum 4 vorhanden. In axialer Richtung gesehen außen liegend weist der Elastomerkörper jeweils eine Ringdichtung 3a bzw. 3b auf. Diese dichtet gegenüber der Umgebung ab, sodass keine Verunreinigungen oder Feuchtigkeit in die relativ zueinander bewegten Bereiche des Gummilagers gelangen können. Im rechten Bildteil weist die Ringdichtung 3a eine Besonderheit auf. In ihren Außenumfang ist eine Nut 5 eingelassen in die zur Verbesserung der Dichtungswirkung beispielsweise ein Spannring oder ein anderes die Dichtwirkung verstärkendes Element einsetzbar ist. Durch den im Querschnitt reduzierten Übergangsbereich 3c bzw. 3d des Elastomerkörpers wird in diesem Abschnitt auf der Außenseite des Elastomerkörpers eine Kehlung 10 gebildet, wie dies im linken Bildteil der Figur 1 erkennbar ist.

In der Figur 1 sind somit zwei unterschiedliche Varianten eines erfindungsgemäßen Gummilagers gezeigt, die vom Grundprinzip her gleich aufgebaut sind jedoch Unterschiede in der Gestaltung des Elastomerkörpers aufweisen. Bevorzugt wird ein erfindungsgemäßes Gummilager selbstverständlich in symmetrischer Ausführung, also beidseitig baugleich, ausgeführt. Die Außenhülse 2 ist gemäß Figur 1 in ein Kraftfahrzeugbauteil 12 eingesetzt.

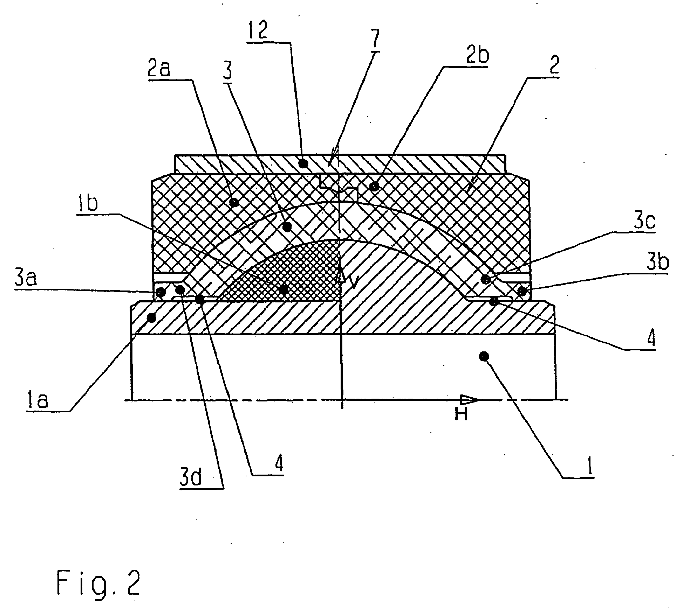

In der Figur 2 wird im linken Bildteil eine weitere erfindungsgemäße Ausgestaltung eines Gummilagers gezeigt. Dieses weist im Unterschied zu der in Figur 1 beschrieben Lösung ein zweiteiliges Innenteil 1 auf. Das Innenteil 1 besteht demnach aus einem zylindrischen ersten Bauteil 1a und einem sphärischen zweiten Bauteil 1b. Das erste Bauteil 1a ist dabei als metallisches Rohr ausgeführt, während das zweite Bauteil 1b durch eine auf das erste Bauteil aufgespritzte Kugel aus Kunststoff gebildet wird. Auch bei dem hier gezeigten Gummilager ist die Außenhülse 2 als zweiteilige Außenhülse ausgeführt und weist im Verbindungsbereich 7 eine Schnappverbindung auf. Der Elastomerkörper 3 bildet wie zuvor bereits beschrieben, Ringdichtungen 3a und 3b auf beiden Seiten des Gummilagers die an dem zylindrischen ersten Bauteil la dichtend anliegen und somit die gleitend miteinander in Kontakt stehenden Oberflächen des Elastomerkörpers und des Innenteiles gegen Verunreinigungen schützen. Die Ringdichtungen 3a bzw. 3b des Ausführungsbeispieles in Figur 2 sind auf ihrer Außenoberfläche einfacher ausgeführt als dies bei dem Beispiel in Figur 1 der Fall war. So ist in Figur 2 eine zylindrische Außenoberfläche des Ringdichtungsbereiches 3a, 3b vorhanden.

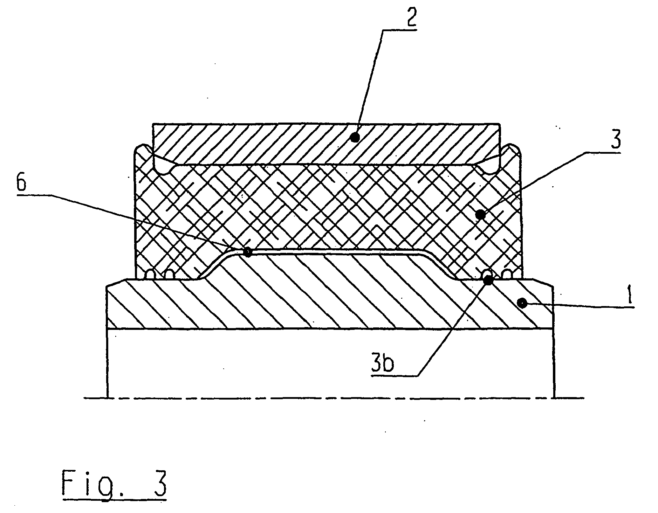

Eine im Aufbau noch stärker vereinfachte Ausführung eines Gummilagers, welches allerdings lediglich das Verständnis der Erfindung erleichtert, ist im Schnitt in der Figur 3 gezeigt. Dieses besteht vorliegend aus einer einteiligen Außenhülse 2, einem einteiligen Innenteil 1 und einem zwischen beiden angeordneten Elastomerkörper 3. Das Innenteil 1 ist zylindrisch ausgeführt und weist etwa mittig eine leicht sphärische Oberflächengeometrie auf, die im zentralen Bereich wiederum in eine zylindrische Geometrie übergeht. In dem sphärischen und zylindrischen Bereich des Innenteiles 1 besteht ein Abstand 6 zwischen dem Elastomerkörper 3 und der Außenoberfläche des Innenteiles 1. Der Elastomerkörper 3 weist an den axialen Enden dieses Gummilagers jeweils Ringdichtungen 3a und 3b auf, die vorliegend als Labyrinthdichtungen ausgeführt sind. Durch den Abstand 6 zwischen Innenteil und Elastomerkörper wird die Reibung zwischen diesen beiden Bauteilen in erheblichem Maße herabgesetzt. Darüber hinaus ist die Kennung eines derartigen Gummilagers in radialer Richtung zunächst weich und geht dann in eine härtere, der Shore-Härte des Elastomerkörpers entsprechende Dämpfung über.

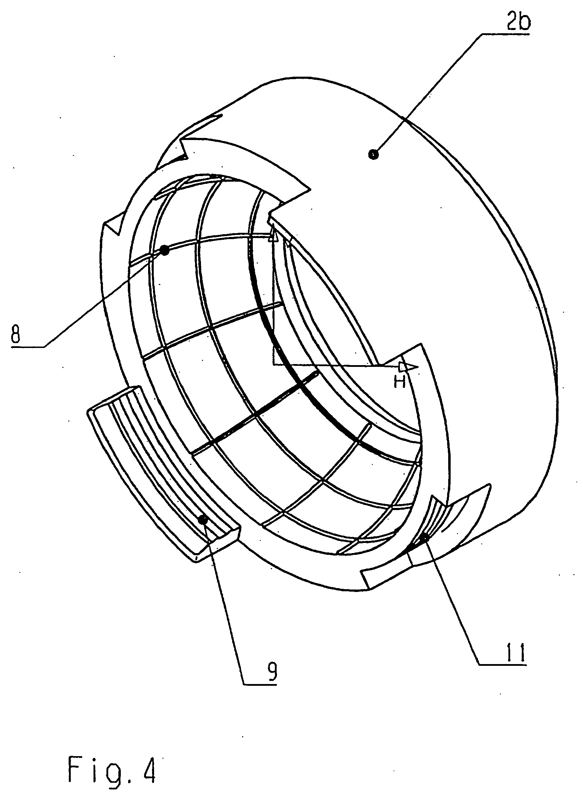

Die Figur 4 zeigt ein Teil 2b der insgesamt mit 2 bezeichneten Außenhülse 2 in räumlicher Darstellung. Dieses weist auf seiner Innenoberfläche Vertiefungen 8 auf, in die sich der unter Vorspannung befindliche Elastomerkörper 3 eines erfindungsgemäßen Gummilagers einprägt, sodass zwischen dem Elastomerkörper und der diesen aufnehmenden Außenhülse 2b eine formschlüssige Verbindung besteht. Zur Verbindung der Einzelteile 2a und 2b der Außenhülse 2 weisen diese in ihrem Kontaktbereich eine komplementäre Geometrie auf. Diese Geometrie besteht vorliegend aus einer Rastverbindung mit Stegen 9, die in zugeordnete Ausnehmungen 11 des anderen Außenhülsenteiles 2a eingreifen und auf den kontaktierenden Oberflächen eine komplementäre, wellenförmige Kontur aufweisen. Somit wird gleichzeitig eine Verdrehsicherung sowie eine axiale Befestigung der beiden Bauteile aneinander erreicht. Die Innenoberfläche des Einzelteiles 2b der Außenhülse 2 weist eine sphärische Geometrie auf. Die Außenhülse 2 ist dabei vorzugsweise aus faserverstärktem Kunststoff hergestellt, sodass dadurch eine erhebliche Gewichtsreduzierung gegenüber bekannten metallischen Ausführungen erreicht wird.

### Bezugszeichenliste

- 1.: Innenteil
- 1a: erstes Bauteil
- 1b: zweites Bauteil
- 2.: Außenhülse
- 2a: erstes Einzelteil
- 2b: zweites Einzelteil
- 3.: Elastomerkörper
- 3a: Ringdichtung
- 3b: Ringdichtung
- 3c: Übergangsbereich
- 3d: Übergangsbereich
- 4.: Ringraum
- 5.: Nut
- 6.: Abstand
- 7.: Verbindungsbereich
- 8.: Vertiefung
- 9.: Steg
- 10.: Kehlung
- 11.: Ausnehmung
- 12.: Kraftfahrzeugbauteil

## Patentansprüche

1. Gummilager mit einem Innenteil (1), einer Außenhülse (2) und einem Elastomerkörper (3) zwischen Innenteil und Außenhülse, wobei der separat gefertigte Elastomerkörper (3) gleitend auf das Innenteil (1) aufgesetzt ist, **dadurch gekennzeichnet, dass** das Innenteil (1) zumindest abschnittsweise eine sphärische Außenoberfläche und die Außenhülse (2) eine zugeordnete, weitestgehend konstant beabstandete sphärische Innenoberfläche aufweist, zwischen denen der Elastomerkörper (3) angeordnet ist, wobei das zylindrische Innenteil (1) etwa mittig in eine sphärische Geometrie übergeht, wobei beidseitig der sphärischen Geometrie an dem Elastomerkörper (3) jeweils mindestens eine umlaufende Ringdichtung (3a, 3b) ausgebildet ist, die an den zylindrischen Abschnitten des Innenteils (1) anliegt,
und, **dass**
die zweiteilige Außenhülse (2) den Elastomerkörper (3) formschlüssig aufnimmt und/oder das zweiteilige Innenteil (1) aus einem zylindrischen ersten Bauteil (1a) besteht, auf das ein mit einer sphärischen Außenoberfläche versehenes zweites Bauteil (1b) aufgebracht ist.

2. Gummilager nach Anspruch 1, **dadurch gekennzeichnet, dass** die Außenhülse (2) den Elastomerkörper (3) mit einer Vorspannkraft aufnimmt.

3. Gummilager nach einem der vorstehend genannten Ansprüche, **dadurch gekennzeichnet, dass** das erste Bauteil (1a) ein metallisches Rohr ist, auf das eine Kugelgeometrie (1b) aus Kunststoff oder Hartgummi aufgespritzt ist.

4. Gummilager nach Anspruch 1, **dadurch gekennzeichnet, dass** an den Ringdichtungen (3a, 3b) im Kontaktbereich mit dem Innenteil (1) eine Labyrinthdichtung ausgebildet ist.

5. Gummilager nach einem der vorstehend genannten Ansprüche, **dadurch gekennzeichnet, dass** die Ringdichtungen (3a, 3b) lagereinwärts einen abgeschlossenen Ringraum (4) bilden.

6. Gummilager nach einem der vorstehend genannten Ansprüche, **dadurch gekennzeichnet, dass** die Ringdichtungen (3a, 3b) durch einen lippenförmigen Übergangsbereich (3c, 3d) mit dem Elastomerkörper (3) verbunden sind.

7. Gummilager nach einem der vorstehend genannten Ansprüche, **dadurch gekennzeichnet, dass** in den Außenumfang der Ringdichtungen (3a, 3b) eine Nut (5) eingeformt ist.

8. Gummilager nach einem der vorstehend genannten Ansprüche, **dadurch gekennzeichnet, dass** die Außenhülse (2) aus zwei über eine Schraub-, Schnapp-, Rast- oder Steckverbindung miteinander in Eingriff gebrachten Einzelteilen (2a, 2b) besteht.

9. Gummilager nach einem der vorstehend genannten Ansprüche, **dadurch gekennzeichnet, dass** zwischen der Außenoberfläche des Innenteiles (1) und der Innenoberfläche des Elastomerkörpers (3) zumindest abschnittsweise ein geringfügiger radialer Abstand (6) vorhanden ist.

## Claims

1. Rubber bearing having an inner part (1), an outer sleeve (2) and an elastomer body (3) between inner part and outer sleeve, wherein the separately manufactured elastomer body (3) is mounted slidingly onto the inner part (1), **characterized in that** the inner part (1) at least in sections has a spherical outer surface and the outer sleeve (2) has an associated, substantially constantly spaced spherical inner surface, between which the elastomer body (3) is disposed, wherein the cylindrical inner part (1) verges approximately centrally into a spherical geometry, wherein there is formed on either side of the spherical geometry on the elastomer body (3) at least one circumferential annular seal (3a, 3b), which lies against the cylindrical portions of the inner part (1), and that the two-part outer sleeve (2) positively receives the elastomer body (3) and/or the two-part inner part (1) comprises a cylindrical first component (1a), onto which a second component (1b) provided with a spherical outer surface is fitted.

2. Rubber bearing according to claim 1, **characterized in that** the outer sleeve (2) receives the elastomer body (3) with a preloading force.

3. Rubber bearing according to one of the preceding claims, **characterized in that** the first component (1a) is a metal tube, onto which a spherical geometry (1b) of plastics material or hard rubber is injection-moulded.

4. Rubber bearing according to claim 1, **characterized in that** at the annular seals (3a, 3b) in the region of contact with the inner part (1) a labyrinth seal is formed.

5. Rubber bearing according to one of the preceding claims, **characterized in that** the annular seals (3a, 3b) inwards of the bearing form a closed annular chamber (4).

6. Rubber bearing according to one of the preceding claims, **characterized in that** the annular seals (3a, 3b) are connected by a lip-shaped transition region (3c, 3d) to the elastomer body (3).

7. Rubber bearing according to one of the preceding claims, **characterized in that** a groove (5) is incorporated into the outer circumference of the annular seals (3a, 3b).

8. Rubber bearing according to one of the preceding claims, **characterized in that** the outer sleeve (2) comprises two individual parts (2a, 2b), which are brought into mutual engagement by means of a screw, snap, detent or plug-in connection.

9. Rubber bearing according to one of the preceding claims, **characterized in that** between the outer surface of the inner part (1) and the inner surface of the elastomer body (3) there is at least in sections a slight radial clearance (6).

## Revendications

1. Palier élastomère comprenant un élément intérieur (1), une bague extérieure (2) et un corps élastomère (3) disposé entre l'élément intérieur et la bague extérieure, le corps élastomère (3) fabriqué séparément étant monté glissant sur l'élément intérieur (1),
**caractérisé en ce que** l'élément intérieur (1) comporte, en partie au moins, une surface extérieure sphérique, et que la bague extérieure (2) possède une surface intérieure conjuguée sphérique, espacée de façon essentiellement constante, surfaces entre lesquelles est disposé le corps élastomère (3), l'élément cylindrique intérieur (1) développant, à peu près au milieu de celui-ci, une géométrie sphérique, respectivement au moins un joint d'étanchéité annulaire (3a, 3b) étant aménagé sur le corps élastomère (3) des deux côtés de la géométrie sphérique et venant en contact avec les parties cylindriques de l'élément intérieur (1), et que la bague extérieure (2) en deux parties reçoit le corps élastomère (3) en réalisant une conjugaison des formes et/ou que l'élément intérieur (1) en deux parties est constitué d'un premier composant cylindrique (1a) sur lequel est monté un deuxième composant (1b) pourvu d'une surface extérieure sphérique.

2. Palier élastomère selon la revendication 1, **caractérisé en ce que** la bague extérieure (2) reçoit le corps élastomère (3) sous une certaine précontrainte.

3. Palier élastomère selon l'une des revendications précédentes, **caractérisé en ce que** le premier composant (1a) est un tube métallique sur lequel est moulé par injection une géométrie sphérique (1b) en matière plastique ou en caoutchouc dur.

4. Palier élastomère selon la revendication 1, **caractérisé en ce que** les joints d'étanchéité annulaires (3a, 3b) sont pourvus, au niveau de la zone de contact avec l'élément intérieur (1), d'un joint à labyrinthe.

5. Palier élastomère selon l'une des revendications précédentes, **caractérisé en ce que** les joints d'étanchéité annulaires (3a, 3b) définissent, du côté intérieur du palier, un espace annulaire (4).

6. Palier élastomère selon l'une des revendications précédentes, **caractérisé en ce que** les joints d'étanchéité annulaires (3a, 3b) sont reliés au corps élastomère (3) par l'intermédiaire d'une zone de transition (3c, 3d) en forme de lèvres.

7. Palier élastomère selon l'une des revendications précédentes, **caractérisé en ce qu'**une gorge (5) est conformée dans la partie périphérique extérieure des joints d'étanchéité annulaires (3a, 3b).

8. Palier élastomère selon l'une des revendications précédentes, **caractérisé en ce que** la bague extérieure (2) est composée de deux pièces (2a, 2b) amenées en engagement mutuel au moyen d'un assemblage par vis, par enclenchement, par crantage ou à emboîtement.

9. Palier élastomère selon l'une des revendications précédentes, **caractérisé en ce qu'**une légère distance radiale (6) existe par endroits au moins entre la surface extérieure de l'élément intérieur (1) et la surface intérieure du corps élastomère (3).
